(19) Europäisches Patentamt / European Patent Office / Office européen des brevets

(11) **EP 2 768 127 B1**

(12) **FASCICULE DE BREVET EUROPEEN**

(45) Date de publication et mention
de la délivrance du brevet:
**26.06.2019 Bulletin 2019/26**

(51) Int Cl.:
***H02M 1/12*** *(2006.01)*

(21) Numéro de dépôt: **14153664.9**

(22) Date de dépôt: **03.02.2014**

(54) **Procédé et ensemble circuit pour réduire le courant de mode commun**

Verfahren und Schaltungsanordnung zur Gleichtaktstromreduzierung

Method and circuit arrangement for reduction of common mode current

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.02.2013 FR 1351201**

(43) Date de publication de la demande:
**20.08.2014 Bulletin 2014/34**

(73) Titulaire: **Valeo Siemens eAutomotive France SAS 95800 Cergy (FR)**

(72) Inventeur: **Oswald, Dominique 78800 HOUILLES (FR)**

(74) Mandataire: **Argyma 36, rue d'Alsace Lorraine 31000 Toulouse (FR)**

(56) Documents cités:
**WO-A1-2012/026186     US-A1- 2009 121 805**

- **WENJIE CHEN ET AL: "An experimental study and comparison of common mode and differential mode noise compensation characteristic for active EMI filter", POWER ELECTRONICS SPECIALISTS CONFERENCE, 2008. PESC 2008. IEEE, IEEE, PISCATAWAY, NJ, USA, 15 juin 2008 (2008-06-15), pages 4399-4404, XP031300645, ISBN: 978-1-4244-1667-7**
- **MORTENSEN N ET AL: "An Active Common Mode EMI Filter for Switching Converters", INDUSTRY APPLICATIONS SOCIETY ANNUAL MEETING, 2008. IAS '08. IEEE, IEEE, PISCATAWAY, NJ, USA, 5 octobre 2008 (2008-10-05), pages 1-7, XP031354008, ISBN: 978-1-4244-2278-4**
- **MARCELO LOBO HELDWEIN ET AL: "Implementation of a Transformerless Common-Mode Active Filter for Offline Converter Systems", IEEE TRANSACTIONS ON INDUSTRIAL ELECTRONICS, IEEE SERVICE CENTER, PISCATAWAY, NJ, USA, vol. 57, no. 5, 1 mai 2010 (2010-05-01), pages 1772-1786, XP011295954, ISSN: 0278-0046**

**Description**

La présente invention a pour objet la réduction du courant de mode commun circulant entre la masse interne d'un circuit électrique et la terre, lorsque de l'énergie électrique est échangée entre une source d'énergie électrique externe audit circuit et une unité de stockage d'énergie électrique dudit circuit. La source d'énergie électrique appartient par exemple à un réseau électrique étant notamment, mais non exclusivement, un réseau électrique dans lequel le neutre est relié directement à la terre.

Le réseau électrique peut être un réseau de tension alternative, polyphasée ou non, et cette tension est alors redressée pour alimenter l'unité de stockage d'énergie électrique du circuit électrique, par exemple une batterie.

Le problème que l'invention vise à résoudre va être explicité en se référant à l'exemple non limitatif suivant. Le circuit électrique est par exemple embarqué dans un véhicule et peut comprendre un moteur électrique pour la propulsion électrique du véhicule. Le véhicule comprend encore un châssis.

Lorsque l'unité de stockage d'énergie électrique est rechargée par le réseau électrique, le châssis est relié à la terre. Du fait de la présence de composants, parasites ou non, entre le circuit électrique et le châssis, un courant de mode commun peut circuler du circuit vers le châssis et se reboucler via la terre dans le réseau électrique.

Un tel courant de mode commun est dangereux pour un utilisateur qui reposerait par ses pieds sur la terre et qui s'appuierait sur le châssis du véhicule.

Aussi, des normes existent pour limiter la valeur du courant de mode commun admissible entre la partie du circuit électrique en aval d'un redresseur et le châssis. Les normes européennes limitent ainsi à 3,5 mA la valeur maximale du courant de mode commun à une fréquence de 50 Hz.

Pour respecter ces normes, il est connu de prévoir un transformateur d'isolement entre la partie du circuit en aval du redresseur et le châssis. Un tel transformateur peut être coûteux et son intégration dans un espace déjà contraint comme un véhicule peut être difficile.

Il est encore connu d'utiliser pour redresser le courant un composant à interrupteurs commandables, tel qu'un composant dit PFC (Power Factor Corrector), et d'implémenter des stratégies particulières pour la commande des interrupteurs. De telles stratégies peuvent conduire à un échauffement des interrupteurs et être très complexes.

Dans le domaine des hautes fréquences, on connaît par la publication « A simplified active input EMI filter of common-mode voltage cancellation for induction motor drive » un filtre actif permettant de réduire le courant de mode commun aux hautes fréquences en injectant une tension en série dans le réseau électrique.

On connaît également de la demande US 2004/0004514 un filtre actif cherchant à réduire le courant de mode commun aux hautes fréquences dans le domaine de la compatibilité électromagnétique (CEM).

Il est par ailleurs connu le document WO 2012/26186 A1 qui décrit un circuit électrique comportant un étage de redressement, une ligne électrique et un composant électronique relié d'une part à la ligne électrique et d'autre part à la terre, ledit composant électronique étant configuré pour appliquer en un point d'injection du circuit une grandeur électrique destinée à réduire le courant de mode commun.

L'invention vise à remédier aux inconvénients des solutions ci-dessus pour réduire le courant de mode commun entre le circuit électrique et la terre.

L'invention y parvient, selon l'un de ses aspects, à l'aide d'un procédé de réduction du courant de mode commun circulant entre la masse interne d'un circuit électrique et la terre lorsque de l'énergie électrique comme défini dans la revendication 1.

La source d'énergie électrique peut faire partie d'un réseau électrique et la grandeur électrique appliquée peut permettre de réduire le courant de mode commun à la fréquence du réseau électrique. La grandeur électrique appliquée peut également permettre de réduire le courant de mode commun aux dix premières harmoniques de cette fréquence du réseau électrique.

Le point relié via au moins une impédance à la ligne électrique sera appelé par la suite « point d'injection ». On désignera ultérieurement par la suite par :

- « en amont du point d'injection », la partie de la ligne électrique disposée entre le réseau électrique et la ou les impédances reliées au point d'injection, c'est-à-dire en amont desdites impédances, et
- « en aval du point d'injection », la partie de la ligne électrique disposée entre la ou les impédances reliées au point d'injection et l'unité de stockage d'énergie électrique, c'est-à-dire en aval desdites impédances.

Le point d'injection peut être relié à la ligne électrique via au moins un condensateur. La capacité de chaque condensateur peut être de l'ordre d'un $\mu$F.

En variante, le point d'injection peut être relié à la ligne électrique via au moins une bobine, ou via au moins une résistance ou via un transformateur ou via une association des composants qui viennent d'être cités.

La grandeur électrique appliquée au point d'injection par le composant électronique peut être :

- un potentiel électrique, auquel cas une tension est appliquée par le composant électronique entre ledit point d'injection et la terre, ou
- un courant électrique, auquel cas ce courant circule entre ledit point d'injection et la terre.

La grandeur électrique appliquée par le composant électronique lorsque le procédé ci-dessus correspond à une charge de l'unité de stockage d'énergie électrique du circuit depuis la source d'énergie électrique du réseau peut provoquer la génération d'un courant s'opposant au courant de mode commun circulant dans la ligne électrique en aval du point d'injection.

Lorsque le composant électronique applique un courant électrique au point d'injection, c'est ce courant qui est le courant généré mentionné ci-dessus.

Lorsque le composant électronique applique un potentiel électrique au point d'injection, l'application de ce potentiel provoque la génération du courant électrique mentionné ci-dessus.

Le courant ainsi généré du fait de l'application de ladite grandeur électrique par le composant électronique peut avoir une valeur inférieure ou égale à la valeur du courant de mode commun circulant dans la ligne électrique en aval du point d'injection. Ce courant généré vaut par exemple en valeur absolue au moins 50%, mieux 60%, mieux 70%, mieux 80%, mieux 90%, mieux 95%, du courant mode commun circulant dans la ligne électrique en aval du point d'injection.

Plus la valeur du courant ainsi généré est proche de la valeur du courant de mode commun dans la ligne électrique en aval du point d'injection, plus la valeur du courant de mode commun circulant dans la ligne électrique en amont du point d'injection, c'est-à-dire entre autres dans le réseau électrique peut être réduite, par application de la loi des noeuds. Le courant généré du fait de l'application par le composant électronique de ladite grandeur électrique peut ainsi être une image aussi proche que possible du courant de mode commun circulant dans la ligne électrique en aval du point d'injection.

La ligne électrique peut être monophasée, auquel cas ledit point d'injection peut être relié :

- à la phase de la ligne électrique via au moins une impédance interposée entre ledit point et ladite phase, et
- au neutre de la ligne électrique via au moins une impédance interposée entre ledit point d'injection et ledit neutre.

Dans une variante du cas d'une ligne électrique monophasée, le point d'injection peut être relié seulement à la phase, respectivement au neutre, de la ligne électrique via une impédance sans être relié au neutre, respectivement à la phase, de ladite ligne électrique.

En variante, la ligne électrique peut être triphasée, auquel cas le point d'injection peut être relié à chaque phase de la ligne électrique via au moins une impédance respective.

Dans une variante du cas d'une ligne électrique triphasée, le point d'injection n'est pas relié à certaines phases de la ligne.

Plus globalement, la ligne électrique peut être polyphasée, le nombre de phases pouvant être différent de trois.

Ladite grandeur peut être appliquée par le composant électronique au moins en fonction d'un signal représentatif du courant de mode commun, notamment mesuré en amont du point d'injection. Autrement dit, le composant électronique peut générer ladite grandeur au moins en fonction d'un signal représentatif du courant de mode commun, ce dernier étant mesuré en un ou plusieurs emplacements de la ligne électrique.

Selon un premier exemple de mise en oeuvre de l'invention, ladite grandeur est appliquée par le composant électronique en fonction uniquement d'un signal représentatif du courant de mode commun, notamment en fonction uniquement d'un signal représentatif du courant de mode commun mesuré en amont du point d'injection. Autrement dit, le composant électronique génère ladite grandeur uniquement en fonction de ce signal représentatif du courant de mode commun, ce dernier étant mesuré en un seul ou plusieurs emplacements de la ligne, notamment en un seul emplacement en amont du point d'injection.

Le composant électronique peut, lorsque ladite grandeur est générée uniquement en fonction du signal représentatif du courant de mode commun mesuré en un seul emplacement de la ligne électrique, être assimilé à une boucle à un seul gain.

Selon un deuxième exemple de mise en oeuvre de l'invention, notamment lorsque ladite grandeur électrique est un potentiel électrique, ladite grandeur est appliquée par le composant électronique en fonction :

- d'un signal représentatif du courant de mode commun, notamment mesuré en amont du point d'injection, et
- d'un signal représentatif du courant circulant entre ledit point d'injection et la terre.

Autrement dit, le composant électronique peut générer ladite grandeur en fonction d'un signal représentatif du courant de mode commun mesuré en un seul ou plusieurs emplacements de la ligne, notamment uniquement en amont du point d'injection, et d'un signal représentatif du courant circulant entre ledit point d'injection et la terre.

Lorsque le signal représentatif du courant de mode commun est mesuré en un seul emplacement selon ce deuxième exemple de mise en oeuvre de l'invention, le composant électronique peut être assimilé à une boucle à deux gains.

Le composant électronique peut alors comprendre :

- un premier sous-composant recevant en entrée le signal représentatif du courant de mode commun, notamment mesuré en amont du point d'injection, et
- un deuxième sous-composant recevant en entrée le signal représentatif du courant circulant entre ledit point d'injection et la terre,

les sorties de chaque sous-composant étant additionnées pour générer ladite grandeur appliquée par le composant électronique.

Le premier sous-composant peut être identique au composant électronique selon le premier mode de réalisation. En variante, le premier sous-composant peut fournir un gain de valeur plus importante que celle du gain fourni par le composant électronique selon le premier mode de réalisation

Le deuxième sous-composant peut fournir un deuxième gain permettant d'améliorer la stabilité aux hautes et basses fréquences en supprimant les oscillations induites par le premier sous-composant pour ces hautes et basses fréquences. Ce deuxième sous-composant peut ainsi asservir le courant généré du fait de l'application de ladite grandeur électrique à une valeur égale au produit du gain fourni par le premier sous-composant et du courant de mode commun mesuré.

Selon une variante de ce deuxième exemple de mise en oeuvre de l'invention, le courant de mode commun peut être mesuré en deux emplacements différents de la ligne électrique, et la grandeur appliquée par le composant électronique peut être déterminée en fonction :

- d'un signal représentatif du courant de mode commun mesuré sur la ligne électrique entre la source d'énergie électrique du réseau et la ou les impédances reliant la ligne électrique audit point d'injection, c'est-à-dire en amont du point d'injection,
- d'un signal représentatif du courant de mode commun mesuré sur la ligne électrique entre la ou les impédances reliées au point d'injection et le circuit électrique, c'est-à-dire en aval du point d'injection, et
- d'un signal représentatif du courant circulant entre ledit point d'injection et la terre, c'est-à-dire du courant généré du fait de l'application de ladite grandeur électrique par composant électronique.

Autrement dit, deux mesures distinctes représentant le courant de mode commun peuvent être utilisées pour la génération de ladite grandeur électrique.

La mesure du courant de mode commun en aval du point d'injection peut permettre de réaliser une rétro-action (« feed forward » en anglais).

Selon cette variante, le composant électronique peut, pour réaliser cette boucle à deux gains avec rétro-action, présenter :

- un premier sous-composant recevant en entrée le signal représentatif du courant de mode commun mesuré en amont de la ou des impédances reliées audit point d'injection,
- un deuxième sous-composant recevant en entrée : à la fois le signal représentatif du courant circulant entre ledit point d'injection et la terre, et la sortie d'un troisième sous-composant, ces deux signaux étant notamment comparés, ie soustraits, l'un à l'autre avant traitement par le deuxième sous-composant,
- un troisième sous-composant recevant en entrée le signal représentatif du courant de mode commun mesuré en aval de la ou des impédances reliées au point d'injection, et dont la sortie est une des entrées du deuxième sous-composant. Le troisième sous-composant peut se comporter comme un gain, notamment un gain unitaire.

Selon une variante du deuxième exemple de mise en oeuvre de l'invention, notamment lorsque ladite grandeur électrique est un courant électrique, ladite grandeur est appliquée par le composant électronique en fonction :

- d'un signal représentatif du courant de mode commun en amont du point d'injection, et
- d'un signal représentatif du courant de mode commun en aval du point d'injection.

Le composant électronique peut être assimilé à une boucle à deux gains.

Le composant électronique peut alors comprendre :

- un premier sous-composant recevant en entrée le signal représentatif du courant de mode commun en amont du point d'injection, et

- un deuxième sous-composant recevant en entrée la sortie d'un troisième sous-composant dont l'entrée est un signal représentatif du courant de mode commun en aval du point d'injection,

les sorties du premier et du deuxième sous-composant étant additionnées pour générer ladite grandeur appliquée par le composant électronique.

Le premier sous-composant peut être identique au composant électronique selon le premier mode de réalisation. En variante, le premier sous-composant peut fournir un gain de valeur plus importante que celle du gain fourni par le composant électronique selon le premier mode de réalisation

Le deuxième sous-composant peut fournir un deuxième gain permettant d'améliorer la stabilité aux hautes et basses fréquences en supprimant les oscillations induites par le premier sous-composant pour ces hautes et basses fréquences. Ce deuxième sous-composant peut ainsi asservir le courant appliqué au point d'injection à une valeur égale au produit du gain fourni par le premier sous-composant et du courant de mode commun mesuré.

Selon un troisième exemple de mise en oeuvre de l'invention, notamment lorsque ladite grandeur électrique est un potentiel électrique, ladite grandeur électrique est appliquée par le composant électronique en fonction :

- d'un signal représentatif du courant de mode commun, notamment mesuré en amont du point d'injection,
- d'un signal représentatif du courant circulant entre ledit point d'injection et la terre, et
- d'un signal représentatif du courant circulant dans un condensateur d'un filtre d'interférences électromagnétiques, le filtre d'interférences électromagnétiques étant disposé entre la ou les impédances reliant la ligne électrique au point d'injection, et l'unité de stockage d'énergie électrique, ie en aval du point d'injection.

Autrement dit, le composant électronique peut générer ladite grandeur électrique en fonction :

- du courant de mode commun dont un signal représentatif est mesuré en un seul ou plusieurs emplacements de la ligne électrique, notamment uniquement en amont du point d'injection,
- d'un signal représentatif du courant circulant entre le point d'injection et la terre, et
- d'un signal représentatif du courant circulant dans le filtre d'interférences électromagnétiques.

Le filtre électromagnétique, encore appelé « filtre EMI » ou « filtre CEM » comprend généralement des condensateurs connus sous l'appellation « capacité Y ». Plusieurs capacités Y peuvent relier à la terre un point relié en outre à chaque conducteur de la ligne électrique par d'autres condensateurs, et ledit courant dans le filtre d'interférences électromagnétiques dont une mesure est utilisée comme entrée du composant électronique selon ce troisième exemple de mise en oeuvre de l'invention est par exemple celui circulant dans l'une de ces capacités Y.

Lorsque le signal représentatif du courant de mode commun est mesuré en un seul emplacement de la ligne électrique, notamment en amont du point d'injection, selon ce troisième exemple de mise en oeuvre de l'invention, le composant électronique peut être assimilé à une boucle à deux gains avec ajout d'une rétro-action ou « feed forward ».

Similairement au deuxième exemple de mise en oeuvre de l'invention, le composant électronique peut, pour réaliser cette boucle à deux gains avec rétro-action, présenter :

- un premier sous-composant recevant en entrée le signal représentatif du courant de mode commun mesuré en amont de la ou les impédances reliées au point d'injection,
- un deuxième sous-composant recevant en entrée : à la fois le signal représentatif du courant circulant entre le point d'injection et la terre, et la sortie d'un troisième sous-composant, une opération de soustraction entre ces deux signaux étant notamment effectuée avant traitement du signal en résultant par le deuxième sous-composant, et
- un troisième sous-composant recevant en entrée le signal représentatif dudit courant dans le filtre d'interférences électromagnétiques, et dont la sortie est une des entrées du deuxième sous-composant,

Le troisième sous-composant peut être dédié à la rétro-action et permettre, avec le deuxième sous-composant, un contrôle du courant de mode commun en boucle ouverte. Le premier sous-composant peut alors permettre de supprimer les erreurs résiduelles après traitement par les deuxième et troisième sous-composants. Ces erreurs résiduelles sont par exemple liées à la connaissance imprécise :

- de la valeur de l'impédance existant, du fait de la présence du filtre d'interférences électromagnétiques, entre la ligne électrique et la terre,
- de la valeur de l'impédance du condensateur parasite existant entre la masse du circuit électrique et la terre, et
- de la valeur de l'impédance de la terre.

Selon une variante du troisième exemple de mise en oeuvre de l'invention, notamment lorsque ladite grandeur électrique est un courant électrique, ladite grandeur électrique est appliquée par le composant électronique en fonction :

- d'un signal représentatif du courant de mode commun en amont du point d'injection, et
- d'un signal représentatif du courant circulant dans un condensateur d'un filtre d'interférences électromagnétiques, le filtre d'interférences électromagnétiques étant disposé entre la ou les impédances reliant la ligne électrique au point d'injection, et l'unité de stockage d'énergie électrique, ie en aval du point d'injection.

Autrement dit, le composant électronique peut générer ladite grandeur électrique en fonction :

- du courant de mode commun dont un signal représentatif est mesuré en amont du point d'injection, et
- d'un signal représentatif du courant circulant dans le filtre d'interférences électromagnétiques.

Le composant électronique peut être assimilé à une boucle à deux gains.

Similairement au deuxième exemple de mise en oeuvre de l'invention, le composant électronique peut, pour réaliser cette boucle à deux gains, présenter :

- un premier sous-composant recevant en entrée le signal représentatif du courant de mode commun mesuré en amont de la ou les impédances reliées au point d'injection,
- un deuxième sous-composant recevant en entrée la sortie d'un troisième sous-composant dont l'entrée est un signal représentatif dudit courant dans le filtre d'interférences électromagnétiques

Dans tout ce qui précède, le courant de mode commun peut être mesuré sur la ligne électrique à l'aide d'un noyau magnétique autour duquel sont bobinés :

- chaque conducteur de la ligne électrique, et
- un conducteur de mesure.

Le noyau magnétique est par exemple un tore magnétique nanocristallin ou en ferrite. Le signal représentatif du courant de mode commun peut alors être une tension, mais tout autre signal représentatif est possible, y compris la mesure du courant de mode commun lui-même.

Lorsque l'énergie électrique est échangée entre la source d'énergie électrique et le circuit électrique sous la forme d'un signal triphasé, on peut mesurer le signal représentatif du courant circulant dans chaque phase et additionner vectoriellement chacun de ces signaux pour obtenir le signal représentatif du courant de mode commun.

L'invention peut ainsi permettre de déterminer de façon dynamique la valeur de la grandeur électrique à appliquer pour réduire le courant de mode commun.

Le composant électronique peut être configuré de manière à asservir la valeur du courant de mode commun en amont du point d'injection, dont il reçoit un signal représentatif en entrée, à une valeur de consigne prédéfinie, notamment zéro ou toute valeur inférieure à la valeur maximale admise par les normes.

Le procédé selon l'invention propose alors d'utiliser un filtre actif pour asservir la valeur du courant de mode commun en amont du point d'injection de préférence à zéro, contrairement aux solutions telle que celle divulguée par la demande US 2010/0295508, dans lesquelles on enseigne d'injecter un courant identique au courant de mode commun en aval du point d'injection, de manière à ce que par une loi des noeuds, le courant de mode commun circulant en amont du point d'injection, et donc notamment dans la source d'énergie électrique du réseau électrique, soit nul. La solution divulguée par la demande US 2010/0295508 ne consiste ainsi pas à asservir directement le courant de mode commun en amont du point d'injection à zéro mais à agir indirectement sur ce dernier en travaillant sur le courant de mode commun en aval du point d'injection.

Le composant peut ne former un filtre actif du courant de mode commun qu'à la fréquence du réseau, cette dernière étant généralement de 50 Hz ou de 60 Hz.

En variante, le composant électronique peut être configuré pour ne filtrer :

- que le courant de mode commun à la fréquence du réseau, et
- que les dix premiers harmoniques de la fréquence du réseau de ce courant de mode commun.

Dans le cas où le réseau électrique fournit une tension à 50 Hz, le composant électronique peut ainsi filtrer le courant de mode commun pour des fréquences comprises entre 50 Hz et 500 Hz.

Le composant électronique peut présenter un gain en dB positif pour des fréquences comprises entre 5 Hz et 1,1 kHz. Le composant électronique peut être dépourvu de transistor à effet de champ. Le composant électronique comprend par exemple des transistors bipolaires, notamment dimensionnés pour supporter une tension Vce de l'ordre de 450 V.

Le composant électronique peut se comporter comme un gyrateur.

Dans tous les exemples ci-dessus, le composant peut appliquer une seule tension entre le point d'injection et la terre.

En variante, dans tous les exemples ci-dessus, ladite tension peut être appliquée entre le point d'injection et la terre, en appliquant :

- une première tension entre le point d'injection et la masse interne du composant électronique, et
- une deuxième tension de signe opposé à celui de la première tension entre la terre et la masse interne du composant électronique,

de manière à ce que la différence entre la première et la deuxième tension soit égale à ladite tension appliquée.

On peut ainsi utiliser deux amplificateurs pour réaliser ladite tension appliquée. De cette façon, chaque amplificateur peut être réalisé à l'aide de composants moins coûteux que les composants nécessaires à la réalisation d'un amplificateur assurant à lui seul la génération de ladite tension appliquée.

La masse interne du circuit et la masse interne du composant électronique peuvent ne pas être reliées ensemble. Elles ne sont notamment pas au même potentiel.

Le circuit électrique peut comprendre un étage de redressement de la tension alternative fournie lors de la charge de l'unité de stockage d'énergie électrique par la source d'énergie électrique, cet étage ayant une borne de sortie positive et une borne de sortie négative, et la masse interne du circuit peut être formée par la borne de sortie négative ou positive dudit étage.

L'étage de redressement peut ou non être configuré pour adapter la valeur de la tension redressée aux composants en aval de cet étage. L'étage de redressement est par exemple un composant PFC, notamment un composant PFC sans pont (Bridgeless PFC).

Selon un exemple de mise en oeuvre de l'invention, l'unité de stockage d'énergie électrique est branchée entre les bornes de sortie positive et négative de l'étage de redressement. Comme déjà mentionné, le procédé ci-dessus est notamment mis en oeuvre lorsque cette unité de stockage d'énergie est rechargée par la source d'énergie électrique.

L'unité de stockage d'énergie électrique est par exemple formée par une ou plusieurs batteries. Dans ce dernier cas, les batteries peuvent être montées et série et/ou en parallèle.

La tension aux bornes de l'unité de stockage d'énergie, lorsqu'elle est chargée, peut être comprise entre 150 V et 450 V. La puissance électrique absorbée par l'unité de stockage d'énergie peut être supérieure ou égale à 100W, par exemple de l'ordre de quelques kW lorsque le réseau électrique est monophasé, voire 20 kW ou plus avec un réseau triphasé.

L'unité de stockage d'énergie électrique peut être embarquée sur un véhicule à propulsion électrique ou hybride et ladite unité peut être destinée à alimenter un moteur électrique de propulsion du véhicule. Plus généralement, le circuit électrique peut être embarqué sur ce véhicule.

Le circuit électrique peut comprendre des inductances formées par les enroulements du stator du moteur électrique.

Le composant électronique peut être embarqué sur le véhicule ou être disposé en dehors de ce dernier, étant par exemple intégré à une borne de recharge du réseau électrique à laquelle se branche un connecteur du circuit électrique en vue d'un transfert d'énergie électrique entre la source d'énergie électrique, via la borne, et le circuit électrique.

Avantageusement, il n'est pas nécessaire de prévoir d'isolation galvanique entre la masse interne du circuit électrique et le réseau électrique auquel est branché le circuit pour échanger avec ce dernier de l'énergie électrique.

Grâce au composant électronique, le circuit peut être dépourvu d'isolation galvanique avec la terre, bien qu'il existe une capacité parasite comprise entre 0 et 350 nF, notamment comprise entre 70 nF et 350 nF, entre ledit circuit et la terre.

L'invention a encore pour objet, selon un autre de ses aspects, un composant électronique pour la mise en oeuvre du procédé défini ci-dessus.

L'invention a encore pour objet, selon un autre de ses aspects, un circuit électrique, comprenant :

- un étage de redressement d'une tension d'entrée alternative, ledit étage ayant une borne de sortie positive et une borne de sortie négative, et le circuit ayant une masse interne formée par l'une desdites bornes de sortie,
- une ligne électrique apte à être connectée à une source d'énergie électrique de manière à permettre un échange d'énergie électrique entre ladite source et ledit circuit, la ligne étant reliée audit étage de redressement, directement ou non,
- un composant électronique relié d'une part à la ligne électrique et apte à être relié d'autre part à la terre, le composant étant configuré pour appliquer en un point d'injection relié par au moins une impédance, notamment un condensateur, à la ligne électrique une grandeur électrique permettant, lorsque de l'énergie électrique est échangée entre ladite source d'énergie électrique et ledit circuit, de réduire le courant de mode commun circulant entre la masse interne du circuit et la terre.

Le circuit électrique peut être embarqué sur un véhicule à propulsion hybride ou électrique. En variante, le circuit peut appartenir à tout autre appareil électrique, par exemple à un système d'alimentation d'un moteur électrique, synchrone ou asynchrone.

L'ensemble peut être intégré à tout système dont l'isolation galvanique est onéreuse, par exemple à des chargeurs de batteries absorbant une puissance électrique supérieure ou égale à 100W.

Les caractéristiques présentées ci-dessus en rapport avec le procédé peuvent également être combinées, individuellement ou non, avec le circuit ci-dessus.

Dans tout ce qui précède, lorsqu'un signal représentatif du courant de mode commun n'est mesuré qu'en un seul emplacement, cet emplacement peut se trouver sur la ligne électrique en amont du point d'injection. Le courant de mode commun en amont du point d'injection peut alors être asservi par le composant électronique à une valeur prédéfinie, par exemple zéro.

L'invention pourra être mieux comprise à la lecture qui va suivre d'un exemple non limitatif de mise en oeuvre de celle-ci et à l'examen du dessin annexé sur lequel :

- la figure 1 représente de façon schématique un ensemble au sein duquel peut être mise en oeuvre l'invention,
- la figure 2 représente de façon schématique un modèle en mode commun, équivalent à l'ensemble de la figure 1,
- la figure 3 est une représentation similaire à celle de la figure 1 dans laquelle un composant électronique selon un premier exemple de mise en oeuvre de l'invention est introduit,
- les figures 4 et 5 représentent de façon analogue à la figure 3 deux variantes d'un composant électronique selon un deuxième exemple de mise en oeuvre de l'invention,
- la figure 6 représente le schéma électrique du composant électronique de la figure 4,
- la figure 7 est le diagramme de Bode de la fonction de transfert du composant électronique de la figure 4,
- la figure 8 représente de façon analogue aux figures 3 à 5 un composant électronique selon un troisième exemple de mise en oeuvre de l'invention, et
- les figures 9 à 11 diffèrent respectivement des figures 3, 5 et 8 par le fait que le composant électronique forme une source de courant et non une source de tension.

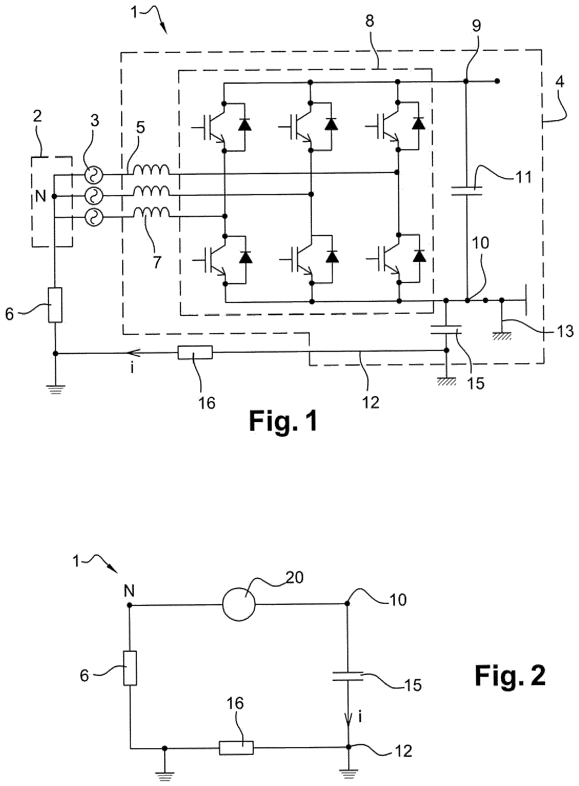

On a représenté à la figure 1 un ensemble 1 au sein duquel l'invention peut être mise en oeuvre.

Cet ensemble 1 comprend une source d'énergie électrique 2 d'un réseau électrique apte à être branché via un connecteur 3 à un circuit électrique 4. Le circuit électrique 4 est dans l'exemple considéré embarqué sur un véhicule à propulsion hybride ou électrique, faisant alors partie du circuit électrique de propulsion de ce véhicule.

Lorsque l'on souhaite charger une unité de stockage d'énergie électrique non représentée du circuit électrique 4, la source d'énergie électrique 2 fournit par exemple une tension alternative au circuit électrique 4. Dans l'exemple considéré, le réseau est triphasé et la tension aux bornes de la source d'énergie électrique 2 a une valeur efficace égale à 230 V. La fréquence de la tension est de 50 Hz dans l'exemple considéré. Le neutre N du réseau électrique est relié à la terre, et une impédance parasite 6 est interposée entre le neutre N et la terre.

Le circuit électrique 4 comprend :

- une ligne électrique 5 reliant le connecteur 3 au reste du circuit électrique 4,
- des inductances 7, et
- un étage 8 de redressement de la tension alternative fournie par la source d'énergie électrique 2 et dont les bornes de sortie 9 et 10 sont parcourues par un courant continu.

L'étage de redressement 8 comprend par exemple des interrupteurs commandables tels que des transistors. L'étage 8 est par exemple un composant PFC, connu de l'homme du métier pour redresser une tension alternative, adapter la valeur de la tension redressée à la charge du circuit 4, et respecter les normes en vigueur quant à la valeur du facteur de puissance et à l'émission de courants harmoniques.

Entre les bornes 9 et 10 de sortie de l'étage 8 est monté un condensateur 11. L'unité de stockage d'énergie électrique, qui est par exemple une batterie, peut être branchée en parallèle de ce condensateur 11. Cette batterie absorbe une puissance électrique par exemple supérieure à 100W, par exemple de l'ordre de 3kW quand le réseau électrique est monophasé, par exemple une puissance de l'ordre de 20 kW quand le réseau électrique est triphasé.

L'ensemble 1 comprend encore un châssis métallique 12. En cas de défaut de la mise à la terre du châssis, ce dernier est potentiellement relié à la terre via une impédance 16. Cette impédance 16 correspond, dans le cas où le châssis fait partie d'un véhicule, à la résistance corporelle d'un utilisateur du véhicule lorsque ce dernier touche d'une part la carrosserie et d'autre part le sol.

Dans l'application où l'ensemble 1 est embarqué sur un véhicule à propulsion électrique ou hybride, les inductances 7 correspondent par exemple alors aux enroulements des phases du stator d'un moteur électrique pour la propulsion d'un moteur électrique. Les enroulements 7 peuvent alors être reliés au réseau électrique selon l'enseignement de la demande WO 2010/057892.

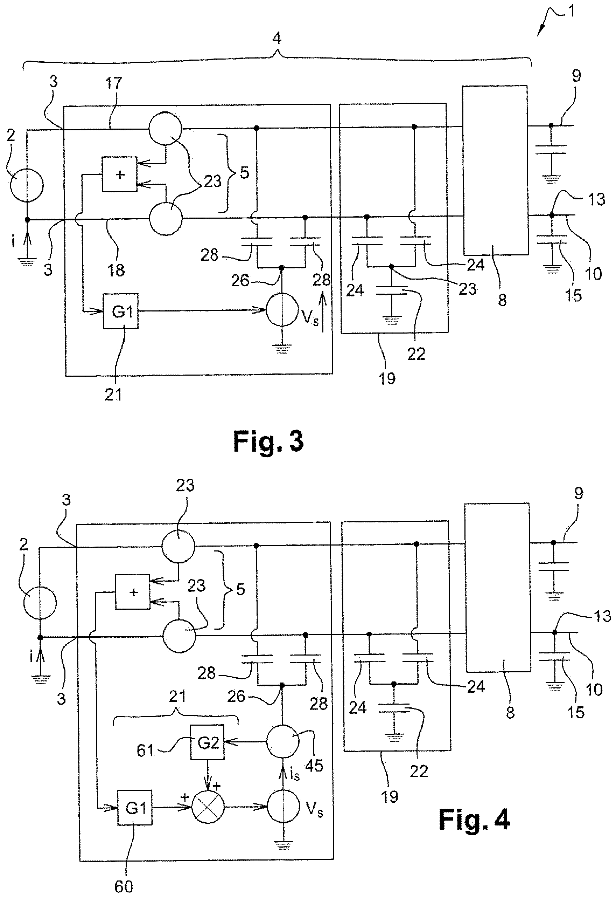

Une capacité 15 modélise les impédances parasites et/ou les impédances réelles ajoutées pour raisons techniques, sous forme de composants électroniques de type condensateurs, notamment entre la borne 10 du circuit 4 et le châssis 12. Une autre capacité peut exister entre la borne 9 du circuit 4 et le châssis 12, comme on peut le voir sur la figure 3.

La borne 10 du circuit 4 est ici la borne négative de sortie de l'étage redresseur 8 et le circuit électrique 4 possède une masse interne 13 qui est ici formée par la borne 10. Du fait de l'existence de ce condensateur 15, du courant de mode commun i peut circuler du circuit 4 vers le châssis 12 et en circulant dans la terre, se reboucler dans le réseau électrique.

Dans le cas où la source d'énergie électrique 2 du réseau électrique fournit une tension alternative polyphasée, et lors d'une séquence de fonctionnement des interrupteurs de l'étage 8 redresseur, la borne 10 est alternativement reliée au neutre du réseau électrique et à l'une des phases de ce réseau électrique. Dans le cas d'un réseau électrique monophasé, la borne 10 est reliée sélectivement au neutre ou à la phase du réseau électrique.

Une tension E est ainsi appliquée entre la borne 10 et le châssis 12 relié à la terre et, du fait de cette tension et du condensateur 15, du courant circule de la borne 10 vers la terre.

La partie du circuit 4 en amont de la borne 10, et le réseau électrique, peuvent ainsi être assimilés à une source de tension virtuelle 20 appliquant alternativement entre la borne 10 et le châssis 12:

- une tension E nulle, et
- une tension E image de celle délivrée par le réseau au circuit 4.

En conséquence, du courant de mode commun i circule à travers le condensateur 15 et les impédances 16 et 6 avant de se reboucler dans le réseau. On obtient ainsi le modèle en mode commun équivalent selon la figure 2.

On va décrire en référence à la figure 3 un exemple de mise en oeuvre de l'invention. Sur cette figure, la ligne électrique 5 est monophasée, comprenant un conducteur 17 formant la phase et un autre conducteur 18 formant le neutre N, mais l'invention n'est pas limitée à une ligne monophasée.

Comparativement à l'ensemble représenté sur la figure 1, l'ensemble 1 de la figure 3 comprend un filtre d'interférences électromagnétiques 19 intégré au circuit 4 et comprenant un condensateur 22, étant ici une capacité Y, monté entre la terre et un point 23 relié à chaque conducteur 17 ou 18 de la ligne électrique 5 via un condensateur 24, étant ici une capacité X.

Comme on peut le voir sur la figure 3, un composant 21 électronique est intégré au circuit 4. Ce composant électronique 21 est ici configuré pour appliquer un potentiel électrique en un point 26, de sorte qu'une tension Vs est appliquée entre ce point 26 et la terre. L'invention n'est cependant pas limitée à un composant électronique appliquant un potentiel électrique, comme on le verra par la suite.

Ce composant 21 est un filtre actif configuré pour appliquer à une fréquence égale à celle de la tension fournie par le réseau électrique un potentiel électrique dont découle la tension Vs, cette tension Vs étant appliquée entre le point 26 et la terre et s'opposant à la tension appliquée par la source de tension virtuelle 20. La tension résultante appliquée aux impédances 6 et 16 est ainsi réduite, notamment annulée, de sorte que le courant parcourant ces impédances 6 et 16 est réduit, notamment annulé.

Le point 26 est relié à chaque conducteur 17 ou 18 de la ligne électrique 5 via un condensateur respectif 28 dans l'exemple décrit. Chaque condensateur 28 a notamment une capacité de l'ordre d'un µF. Le potentiel appliqué par le composant électronique 21 et dont résulte la tension Vs est dans l'exemple considéré généré uniquement sur la base d'un signal représentatif du courant de mode commun i mesuré sur la ligne électrique 5 en amont du point 26.

Dans l'exemple considéré, le composant 21 est associé à un système de mesure 23 du courant de mode commun i parcourant la ligne électrique 5. Dans le cas d'une ligne électrique 5 monophasée, ce système de mesure 23 peut mesurer un signal représentatif du courant dans le conducteur 17 formant la phase et un signal représentatif du courant dans le conducteur 18 formant le neutre, par exemple à l'aide d'un tore magnétique, nanocristallin ou non. Par calcul à partir de ces signaux représentatifs de courant, on peut déterminer la valeur d'un signal représentatif du courant de mode commun i. Sur la base de cette information, le composant électronique 21 génère le potentiel dont résulte la tension Vs qui est appliquée entre le point 26 et la terre.

Comme représenté sur la figure 3, le composant électronique 21 se comporte globalement comme un gain G1 et, en désignant par :

- Zinj l'impédance existant entre le point 26 et la terre du fait de la présence de la tension Vs,
- Zy l'impédance existant entre chaque conducteur 17, 18 et la terre du fait de la présence du condensateur 22 et de la ou les capacités parasites 15,
- Vac la tension aux bornes de la source d'énergie électrique 2.

la valeur du courant de mode commun i circulant dans la ligne électrique 5 en présence du composant électronique est donnée par l'expression :

$$i = \frac{(Zinj + Zy).Vac/2}{Zy.(Zinj + G_1)}$$

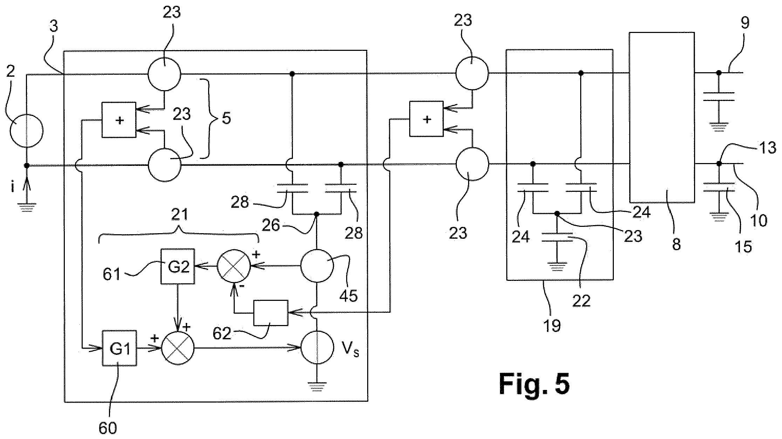

On va maintenant décrire en référence aux figures 4 et 5 un composant électronique 21 selon un deuxième exemple de mise en oeuvre de l'invention.

Contrairement au composant électronique de la figure 3, qui peut être assimilé à une boucle à un seul gain générant un potentiel dont résulte la tension Vs sur la base seulement de la valeur d'un signal représentatif du courant de mode commun i, le composant électronique selon ce deuxième exemple de mise en oeuvre de l'invention génère la tension Vs à la fois sur la base d'un signal représentatif du courant de mode commun i parcourant la ligne électrique 5 mais également sur la base d'un signal représentatif du courant Is circulant entre le point 26 et la terre, ce courant Is pouvant être appelé « courant de sortie du composant électronique 21 ». Un deuxième système de mesure 45 disposé entre le point 26 et la terre peut permettre d'obtenir un signal représentatif dudit courant de sortie.

De façon schématique, on peut considérer que le composant électronique 21 forme ici une boucle à deux gains :

- un premier sous-composant 60 se comportant comme un gain G1 amplifiant le signal représentatif du courant de mode commun i dans la ligne électrique 5 mesuré par le système 23, et
- un deuxième sous-composant 61 se comportant comme un gain G2 amplifiant le signal représentatif du courant de sortie Is circulant entre le point 26 et la terre.

Avec les mêmes notations que précédemment, l'équation donnant la valeur du courant de mode commun i lorsque le composant électronique 21 selon la figure 4 est utilisé est :

$$i = \frac{(Zinj + Zy + G_2).Vac/2}{Zy.(Zinj + G_2 + G_1)}$$

Le deuxième sous-composant 61 formant le gain G2 a pour but de stabiliser le fonctionnement du composant électronique 21 aux hautes et basses fréquences en supprimant les oscillations se produisant à ces fréquences.

Le composant électronique représenté sur la figure 4 reçoit sur une de ses entrées un signal représentatif du courant de mode commun i mesuré en un seul emplacement sur la ligne électrique 5. Cette mesure est ici effectuée par le système 23 en amont du point 26, c'est-à-dire entre le connecteur 3 et les condensateurs 28.

Comme représenté sur la figure 5, selon une variante du deuxième exemple de mise en oeuvre de l'invention, le composant électronique 21 peut générer le potentiel dont résulte la tension de sortie Vs sur la base de deux mesures distinctes représentatives du courant de mode commun i, ces mesures étant effectuées en deux emplacements différents sur la ligne électrique 5. Ainsi, un premier système de mesure 23, disposé similairement au système de mesure des figures 3 et 4 en amont du point 26 sur la ligne électrique 5, fournit un signal formant l'entrée du premier sous-composant 60 tandis qu'un deuxième système de mesure 23, similaire ou non au tore magnétique nanocristallin pouvant être utilisé pour le premier système de mesure 23, peut être disposé en aval du point 26.

Le deuxième système de mesure 23 est par exemple disposé sur la ligne électrique 5 entre les condensateurs 28 et l'étage de redressement 8. Ce deuxième système de mesure 23 fournit en entrée d'un troisième sous-composant 62, formant globalement un gain G3, un signal représentatif du courant de mode commun en aval des condensateurs 28. La sortie du troisième sous-composant 62 peut être comparée au signal fourni par le système de mesure 45 et le résultat de cette comparaison peut former la véritable entrée du deuxième sous-composant 61.

Le gain G3 du troisième sous-composant 62 peut être unitaire et ajouter au composant 21 un contrôle par rétro-action.

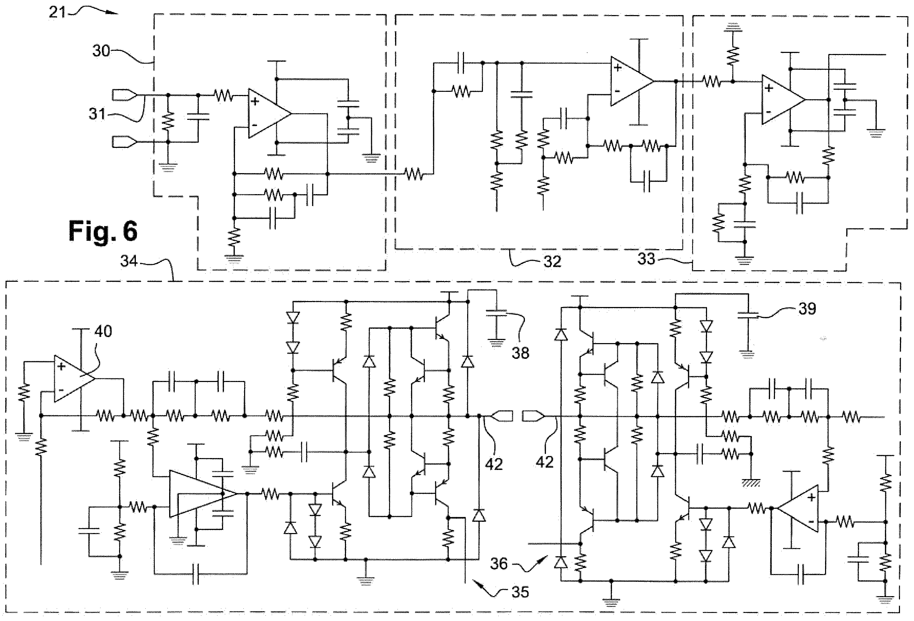

On va maintenant décrire en référence à la figure 6 un exemple non limitatif de schéma électrique du composant électronique 21 de la figure 4.

Le composant électronique 21 comprend un étage d'entrée 30 recevant en entrée la tension mesurée par un conducteur 31 bobiné autour du noyau magnétique du système de mesure 23. Cette tension d'entrée est représentative de la valeur du courant de mode commun i dans la ligne électrique 5.

L'étage 30 a pour rôle d'amplifier la mesure de tension ainsi effectuée tout en filtrant les hautes fréquences.

La sortie de cet étage 30 attaque ensuite un étage 32 de sommation du signal issu de l'étage 30 et d'un signal représentatif du courant de sortie du composant électronique 21. Cet étage 32 permet de réaliser un asservissement du courant de sortie Is au produit du gain G1 du premier sous-composant 60 et du courant de mode commun mesuré par le système de mesure 23.

La sortie de l'étage 32 attaque ensuite un étage 33 formant un amplificateur passe bande. Cet étage 33 a pour fonction d'augmenter le gain global de la boucle formée dans cet exemple par le composant électronique 21, et de couper les basses et les hautes fréquences.

La sortie de l'étage 33 attaque un étage de sortie haute tension 34 qui comprend dans l'exemple décrit deux amplificateurs 35 et 36.

Chacun de ces amplificateurs 35 ou 36 génère une tension à partir d'un signal issu à la base de la mesure effectuée par le système 23. Les deux amplificateurs 35 et 36 peuvent être identiques ou non, et générer ou non une même tension. La première et la deuxième tension ont par exemple toutes deux une amplitude de 300 V environ.

Le premier amplificateur 35 comprend comme on peut le voir un montage inverseur 40.

Avec les deux amplificateurs 35 et 36 représentés sur la figure 6, une première tension est appliquée entre le point 26 et la masse interne 42 du composant électronique 21 par le deuxième amplificateur 36 tandis qu'une deuxième tension de signe opposé est appliquée entre la terre et la masse interne 42 du composant électronique 21 par le premier amplificateur 35. La différence entre ces deux tensions correspond à la tension appliquée par le composant électronique 21 entre le point 26 et la terre pour réduire, mieux annuler, le courant de mode commun i.

Dans un autre exemple non représenté, un seul amplificateur peut être utilisé pour former l'étage 34 générant la tension Vs.

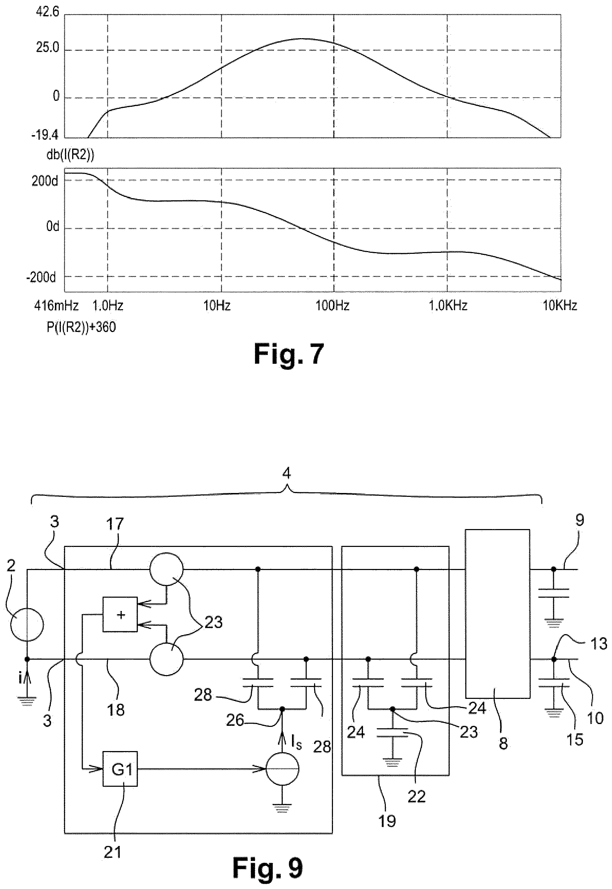

La figure 7 représente le diagramme de Bode du composant électronique 21 qui vient d'être décrit en référence à la figure 6.

On constate que le gain en dB est positif pour des fréquences comprises entre environ 5 Hz et 1 kHz. On constate par ailleurs que le composant électronique présente un gain de 31 dB entre 50 Hz et 60 Hz, soit sensiblement à la fréquence du réseau électrique, et une marche de phase faible lorsque le gain en dB s'annule. Autour de 5 Hz, la marge de phase est dans cet exemple de 115° tandis qu'autour de 1 kHz, la marche de phase est de -105°.

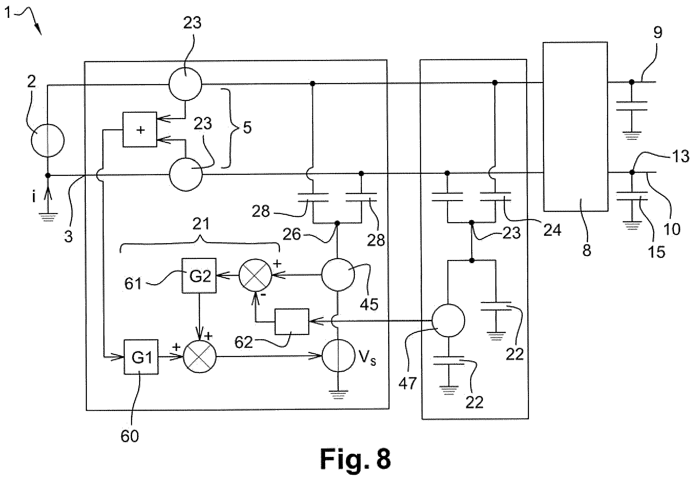

On va maintenant décrire en référence à la figure 8 un composant électronique 21 selon un troisième exemple de mise en oeuvre de l'invention. Similairement à la variante du deuxième exemple de mise en oeuvre de l'invention qui vient d'être décrite en référence à la figure 5, selon ce troisième exemple de mise en oeuvre, la tension Vs résulte d'un potentiel appliqué par le composant électronique 21 qui est généré sur la base de trois entrées.

Dans cet exemple, la première entrée est le signal représentatif du courant de mode commun i mesuré en amont des condensateurs 28 sur la ligne électrique, et la deuxième entrée est la valeur du courant de sortie Is circulant entre le point 26 et la terre, comme selon l'exemple de la figure 5.

Contrairement à l'exemple de la figure 5, la troisième entrée est ici formée par la valeur d'un signal représentatif du courant circulant dans l'un des condensateurs 22 du filtre d'interférences électromagnétiques 19.

Cette troisième entrée est acquise à l'aide d'un système de mesure 47 monté en série avec ledit condensateur 22 et elle est traitée par le troisième sous-composant 62 qui permet un contrôle par rétro-action.

La sortie de ce troisième sous-composant 62 est ensuite comparée au signal représentatif du courant de sortie Is mesuré par le système 45, puis le résultat de ladite comparaison est reçu en entrée du deuxième sous-composant 61.

Avec les mêmes notations que ci-dessus et en désignant par :

- Cyf2 la capacité du condensateur 22 de la figure 8 en série avec le système de mesure 47,
- Cyf1 la capacité du condensateur 22 de la figure 8 en parallèle avec le système de mesure 47, et
- Cor la fonction de transfert du troisième sous-composant 62,

l'équation donnant la valeur du courant de mode commun en fonction de la tension Vac fournie par la source d'énergie électrique 2 en présence du composant électronique 21 de la figure 8 est la suivante :

$$i = \frac{(Zinj + Zy + G_2.(1 - Cor.\frac{C_{yf1}}{C_{yf1} + C_{yf2} + C_{ybat}})).Vac/2}{Zy.(Zinj + G_2 + G_1)}$$

Si on choisit le troisième sous-composant 62 de sorte que sa fonction de transfert prenne la valeur suivante :

$$Cor = \frac{C_{yf1} + C_{yf2} + C_{ybat}}{C_{yf1}}$$

Alors l'équation donnant la valeur du courant de mode commun i en fonction de la tension fournie par la source d'énergie électrique 2 en présence du composant électronique de la figure 8 devient :

$$i = \frac{(Zinj + Zy).Vac/2}{Zy.(Zinj + G_2 + G_1)}$$

Le composant électronique 21 selon la figure 8 met ainsi en oeuvre :

- un contrôle en boucle ouverte avec rétro-action via le troisième sous-composant 62 et le gain G2 fourni par le deuxième sous-composant 61pour supprimer le courant de mode commun i, et
- un contrôle via le premier sous-composant 60 fournissant le gain G1 permettant de supprimer l'erreur résiduelle liée aux imprécisions par exemple sur les valeurs de Zy, Zybat, l'impédance de terre correspondant à la somme des impédances 6 et 16 de la figure 1, ou encore sur la valeur de la fonction de transfert du troisième sous-composant 62.

Les figures 3 à 8 portent sur un composant électronique 21 injectant au point 26 une grandeur électrique qui est un potentiel électrique, c'est-à-dire que le composant électronique 21 se comporte comme une source de tension.
En variante, comme représenté sur les figures 9 à 11, le composant électronique 21 peut être configuré pour injecter un courant électrique au point 26, ce composant 21 se comportant comme une source de courant.
La figure 9 représente ainsi une variante du premier exemple de mise en oeuvre de l'invention de la figure 3 n'en différant que par le fait que le composant électronique 21 injecte un courant et non un potentiel électrique.

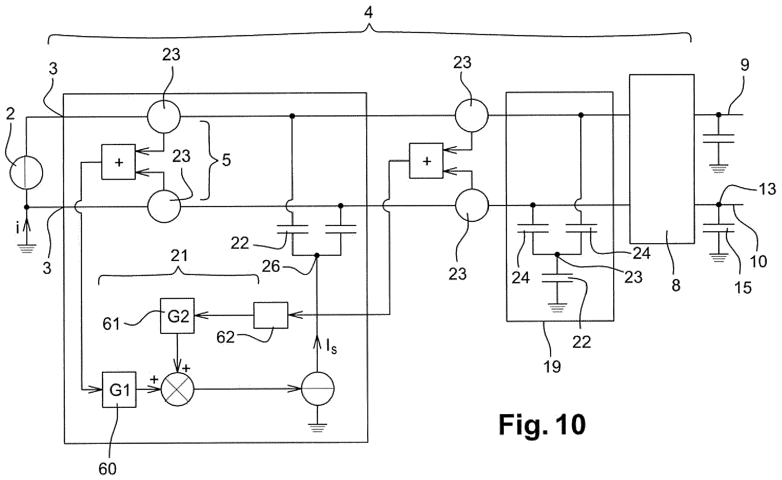

La figure 10 représente ainsi une variante du deuxième exemple de mise en oeuvre de l'invention de la figure 5 n'en différant que :

- par le fait que le composant électronique 21 injecte un courant et non un potentiel électrique, et
- par le fait que le deuxième sous-composant 61 a pour seule entrée la sortie du troisième sous-composant 62, c'est-à-dire que le composant électronique qui génère le courant Is n'a par pour entrée le courant Is mais le courant de mode commun en amont et en aval du point d'injection 26.

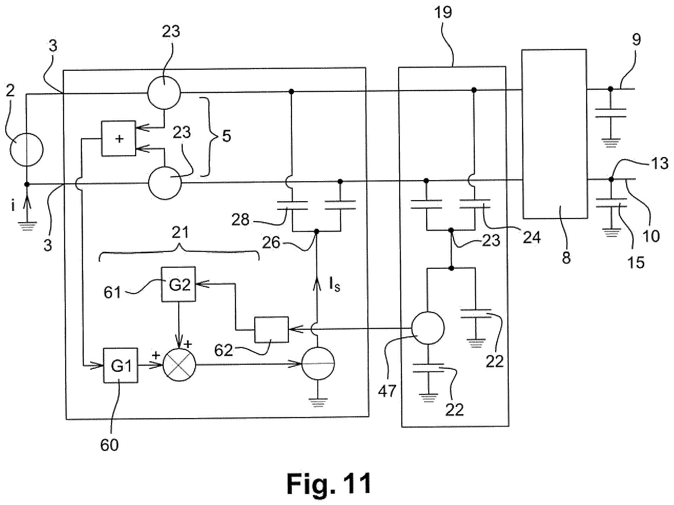

La figure 11 représente ainsi une variante du troisième exemple de mise en oeuvre de l'invention de la figure 8 n'en différant que :

- par le fait que le composant électronique 21 injecte un courant et non un potentiel électrique, et
- par le fait que le deuxième sous-composant 61 a pour seule entrée la sortie du troisième sous-composant 62, c'est-à-dire que la génération par le composant électronique 21 du courant Is ne se fait pas avec ce même courant Is comme entrée mais avec comme entrées le courant de mode commun en amont du point d'injection 26 et le courant circulant dans le condensateur 22 du filtre 19.

Le troisième sous-composant 62 des exemples des figures 10 et 11 permet de mettre en oeuvre une rétro-action.
L'invention peut s'appliquer à d'autres circuits 4 qu'à ceux embarqués sur un véhicule.
L'expression « comportant un » doit être comprise comme signifiant « comportant au moins un », sauf lorsque le contraire est spécifié.

## Revendications

1. Procédé de réduction du courant de mode commun (i) circulant entre la masse interne (13) d'un circuit électrique (4) et la terre, lorsque de l'énergie électrique est échangée entre une unité de stockage d'énergie électrique du circuit électrique (4) et une source d'énergie électrique (2) externe audit circuit (4),
procédé dans lequel on applique à l'aide d'un composant électronique (21) une grandeur électrique (Vs, Is) en un point d'injection (26) relié via au moins une impédance (28) à une ligne électrique (5) dudit circuit (4) par l'intermédiaire de laquelle est échangée ladite énergie électrique, ladite grandeur électrique (Vs, Is) appliquée permettant de réduire le courant de mode commun (i) à la fréquence du réseau électrique, ce courant de mode commun (i) circulant entre la masse interne du circuit (4) et la terre, **caractérisé en ce que**
ladite grandeur électrique (Vs, Is) est appliquée par le composant électronique (21) en fonction :

- d'un signal représentatif du courant de mode commun (i) mesuré sur la ligne électrique (5) entre la source d'énergie électrique (2) du réseau et la ou les impédances (28) reliant la ligne électrique (5) audit point d'injection (26), et
- d'un signal représentatif du courant (Is) circulant entre ledit point d'injection (26) et la terre,

ou en fonction :

- d'un signal représentatif du courant de mode commun (i) mesuré sur la ligne électrique (5) entre la source d'énergie électrique (2) du réseau et la ou les impédances (28) reliant la ligne électrique (5) audit point d'injection (26),
- d'un signal représentatif du courant (Is) circulant entre ledit point d'injection (26) et la terre, et
- d'un signal représentatif du courant de mode commun (i) mesuré sur la ligne électrique (5) entre ledit point d'injection (26) et l'unité de stockage d'énergie électrique,

ou en fonction :

- d'un signal représentatif du courant de mode commun (i) mesuré sur la ligne électrique (5) entre la source d'énergie électrique (2) du réseau et la ou les impédances (28) reliant la ligne électrique (5) audit point d'injection (26),
- d'un signal représentatif du courant (Is) circulant entre ledit point d'injection (26) et la terre, et
- d'un signal représentatif du courant circulant dans un condensateur (22) d'un filtre d'interférences électromagnétiques (19), ledit filtre d'interférences électromagnétiques (19) étant disposé entre la ou les impédances (28) et l'unité de stockage d'énergie électrique.

2. Procédé selon la revendication 1, dans lequel la ligne électrique (5) est monophasée et dans lequel le composant électronique (21) applique ladite grandeur électrique (Vs, Is) en un point d'injection (26) relié :

- à la phase (17) de la ligne électrique (5) via au moins une impédance (28) interposée entre ledit point d'injection (26) et ladite phase (17), et
- au neutre (18) de la ligne électrique (5) via au moins une impédance (28) interposée entre ledit point d'injection (26) et ledit neutre (18),

3. Procédé selon la revendication 1, dans lequel la ligne électrique (5) est triphasée et dans lequel le composant électronique (21) applique ladite grandeur électrique (Vs,Is) en un point d'injection (26) relié à chaque phase de la ligne électrique (5) via au moins une impédance respective (28).

4. Procédé selon l'une quelconque des revendications précédentes, dans lequel ladite grandeur électrique (Vs, Is) est appliquée par le composant électronique (21) en fonction uniquement d'un signal représentatif du courant de mode commun (i) mesuré sur la ligne électrique (5) entre la source d'énergie électrique (2) du réseau et la ou les impédances (28) reliant la ligne électrique (5) audit point d'injection (26).

5. Procédé selon l'une des revendications précédentes, dans lequel le composant électronique (21) comprend :

- un premier sous-composant (60) recevant en entrée le signal représentatif du courant de mode commun (i) mesuré sur la ligne électrique (5) entre la source d'énergie électrique (2) du réseau et la ou les impédances (28) reliant la ligne électrique (5) audit point d'injection (26), et
- un deuxième sous-composant (61) recevant en entrée le courant (Is) circulant entre ledit point d'injection (26) et la terre,

les sorties de chaque sous-composant (60, 61) étant additionnées pour générer la grandeur (Vs, Is) appliquée par le composant électronique (21).

6. Procédé selon l'une quelconque des revendications précédentes, dans lequel le composant électronique (21) est configuré de manière à asservir la valeur du courant de mode commun (i) dont il reçoit en entrée un signal représentatif à une valeur de consigne prédéfinie, notamment zéro.

**7.** Procédé selon l'une quelconque des revendications précédentes, dans lequel ladite grandeur électrique est un potentiel électrique appliqué au point d'injection (26) et dont résulte une tension (Vs) appliqué entre ledit point d'injection (26) et la terre.

**8.** Procédé selon la revendication 7, ladite tension (Vs) étant appliquée entre le point d'injection (26) relié à la ligne électrique (5) via une ou plusieurs impédances (28), et la terre, en appliquant :

- une première tension entre ledit point d'injection (26) et la masse interne (25) du composant électronique (21), et
- une deuxième tension, de signe opposé à celui de la première tension, entre la terre et la masse interne (25) du composant électronique (21),

de manière à ce que la différence entre la première et la deuxième tension soit égale à ladite tension (Vs) résultant de l'application par le composant électronique (21) dudit potentiel électrique.

**9.** Procédé selon l'une quelconque des revendications précédentes, dans lequel le composant électronique (21) est dépourvu de transistor à effet de champ.

**10.** Procédé selon l'une quelconque des revendications précédentes, dans lequel la tension aux bornes de la source d'énergie électrique (2) est une tension alternative dont la fréquence est de 50 Hz ou 60 Hz.

**11.** Procédé selon l'une quelconque des revendications précédentes, le composant électronique (21) étant configuré pour ne former un filtre actif du courant de mode commun qu'à la fréquence du réseau.

**12.** Procédé selon l'une quelconque des revendications 1 à 10, le composant électronique (21) étant configuré pour ne filtrer:

- que le courant de mode commun à la fréquence du réseau, et
- que les dix premiers harmoniques de la fréquence du réseau de ce courant de mode commun.

**13.** Procédé selon l'une quelconque des revendications précédentes, dans lequel le courant de mode commun est mesuré sur la ligne électrique (5) à l'aide d'un noyau magnétique autour duquel sont bobinés :

- chaque conducteur de la ligne électrique, et
- un conducteur de mesure.

**14.** Circuit électrique (4), comportant :

- un étage de redressement (8) d'une tension d'entrée alternative, ledit étage (8) ayant une borne de sortie positive (9) et une borne de sortie négative (10) et le circuit ayant une masse interne (13) formée par l'une desdites bornes (9, 10) de sortie,
- une ligne électrique (5) apte à être connectée à un réseau électrique de manière à permettre un échange d'énergie électrique entre une source d'énergie électrique (2) dudit réseau et ledit circuit (4), la ligne (5) étant reliée audit étage de redressement (8), et
- un composant électronique (21) relié d'une part à la ligne électrique (5), et apte à être relié d'autre part à la terre, le composant (21) étant configuré pour appliquer entre un point (26) relié par au moins une impédance (28) à la ligne électrique (5) une grandeur électrique (Vs, Is) permettant, lorsque de l'énergie électrique est échangée entre le circuit électrique (4) et la source d'énergie électrique (2), de réduire le courant de mode commun (i) à la fréquence du réseau électrique, ce courant de mode commun (i) circulant entre la masse interne (13) du circuit et la terre, **caractérisé en ce que** ladite grandeur électrique (Vs, Is) est appliquée par le composant électronique (21) :

au moins en fonction d'un signal représentatif du courant de mode commun (i) mesuré sur la ligne électrique (5) entre la source d'énergie électrique (2) du réseau et la ou les impédances (28) reliant la ligne électrique (5) audit point d'injection (26), et d'un signal représentatif du courant (Is) circulant entre ledit point d'injection (26) et la terre,

ou au moins en fonction d'un signal représentatif du courant de mode commun (i) mesuré sur la ligne électrique (5) entre la source d'énergie électrique (2) du réseau et la ou les impédances (28) reliant la ligne électrique (5) audit point d'injection (26), d'un signal représentatif du courant (Is) circulant entre ledit point d'injection (26) et la terre, et d'un signal représentatif du courant circulant dans un condensateur (22) d'un filtre d'interférences électromagnétiques (19), ledit filtre d'interférences électromagnétiques (19) étant disposé entre la ou les impédances (28) et l'unité de stockage d'énergie électrique.

**Patentansprüche**

1. Verfahren zur Reduzierung des Gleichtaktstroms (i), der zwischen der internen Masse (13) eines Stromkreises (4) und der Erde fließt, wenn elektrische Energie zwischen einer Speichereinheit elektrischer Energie des Stromkreises (4) und einer sich außerhalb des Kreises (4) befindenden Quelle elektrischer Energie (2) ausgetauscht wird, wobei bei dem Verfahren mit Hilfe eines elektronischen Bauteils (21) eine elektrische Größe (Vs, Is) an einen Einspeisepunkt (26) angelegt wird, der über mindestens eine Impedanz (28) mit einer elektrischen Leitung (5) des Kreises (4) verbunden ist, über welche die elektrische Energie ausgetauscht wird, wobei die angelegte elektrische Größe (Vs, Is) erlaubt, den Gleichtaktstrom (i) auf die Frequenz des Stromnetzes zu reduzieren, wobei dieser Gleichtaktstrom (i) zwischen der internen Masse des Kreises (4) und der Erde fließt, **dadurch gekennzeichnet, dass** die elektrische Größe (Vs, Is) von dem elektronischen Bauteil (21) angelegt wird in Abhängigkeit von:

   - einem Signal, das für den Gleichtaktstrom (i) repräsentativ ist, gemessen auf der elektrischen Leitung (5) zwischen der Quelle elektrischer Energie (2) des Netzes und der oder den Impedanzen (28), welche die elektrische Leitung (5) mit dem Einspeisepunkt (26) verbindet / verbinden, und
   - einem Signal, das für den Strom (Is) repräsentativ ist, der zwischen dem Einspeisepunkt (26) und der Erde fließt,

   oder in Abhängigkeit von:

   - einem Signal, das für den Gleichtaktstrom (i) repräsentativ ist, gemessen auf der elektrischen Leitung (5) zwischen der Quelle elektrischer Energie (2) des Netzes und der oder den Impedanzen (28), welche die elektrische Leitung (5) mit dem Einspeisepunkt (26) verbindet / verbinden,
   - einem Signal, das für den Strom (Is) repräsentativ ist, der zwischen dem Einspeisepunkt (26) und der Erde fließt, und
   - einem Signal das für den Gleichtaktstrom (i) repräsentativ ist, gemessen auf der elektrischen Leitung (5) zwischen dem Einspeisepunkt (26) und der Speichereinheit elektrischer Energie,

   oder in Abhängigkeit von:

   - einem Signal, das für den Gleichtaktstrom (i) repräsentativ ist, gemessen auf der elektrischen Leitung (5) zwischen der Quelle elektrischer Energie (2) des Netzes und der oder den Impedanzen (28), welche die elektrische Leitung (5) mit dem Einspeisepunkt (26) verbindet / verbinden,
   - einem Signal, das für den Strom (Is) repräsentativ ist, der zwischen dem Einspeisepunkt (26) und der Erde fließt, und
   - einem Signal, das für einen Strom repräsentativ ist, der in einem Kondensator (22) eines Filters elektromagnetischer Interferenzen (19) fließt, wobei der Filter elektromagnetischer Interferenzen (19) zwischen der oder den Impedanzen (28) und der Speichereinheit elektrischer Energie angeordnet ist.

2. Verfahren nach Anspruch 1, wobei die elektrische Leitung (5) einphasig ist und wobei das elektronische Bauteil (21) die elektrische Größe (Vs, Is) an einen Einspeisepunkt (26) anlegt, der verbunden ist:

   - mit der Phase (17) der elektrischen Leitung (5) über mindestens eine Impedanz (28), die zwischen dem Einspeisepunkt (26) und der Phase (17) zwischengestellt ist, und
   - mit dem Nullleiter (18) der elektrischen Leitung (5) über mindestens eine Impedanz (28), die zwischen dem Einspeisepunkt (26) und dem Nullleiter (18) zwischengestellt ist.

3. Verfahren nach Anspruch 1, wobei die elektrische Leitung (5) dreiphasig ist und wobei das elektronische Bauteil (21) die elektrische Größe (Vs, Is) an einen Einspeisepunkt (26) anlegt, der mit jeder Phase der elektrischen Leitung (5) über mindestens eine jeweilige Impedanz (28) verbunden ist.

4. Verfahren nach einem der vorangehenden Ansprüche, wobei die elektrische Größe (Vs, Is) von dem elektronischen Bauteil (21) in Abhängigkeit von nur einem Signal angelegt wird, das für den Gleichtaktstrom (i) repräsentativ ist, der auf der elektrischen Leitung (5) zwischen der Quelle elektrischer Energie (2) des Netzes und der oder den Impedanzen (28) gemessen wird, welche die elektrische Leitung (5) mit dem Einspeisepunkt (26) verbindet / verbinden.

5. Verfahren nach einem der vorangehenden Ansprüche, wobei das elektronische Bauteil (21) umfasst:

- ein erstes Unter-Bauteil (60), das am Eingang das Signal empfängt, das für den Gleichtaktstrom (i) repräsentativ ist, der auf der elektrischen Leitung (5) zwischen der Quelle elektrischer Energie (2) des Netzes und der oder den Impedanzen (28) gemessen wird, welche die elektrische Leitung (5) mit dem Einspeisepunkt (26) verbindet / verbinden, und
- ein zweites Unter-Bauteil (61), das am Eingang den Strom (Is) empfängt, der zwischen dem Einspeisepunkt (26) und der Erde fließt,

wobei die Ausgänge jedes Unter-Bauteils (60, 61) addiert werden, um die von dem elektronischen Bauteil (21) angelegte Größe (Vs, Is) zu erzeugen.

6. Verfahren nach einem der vorangehenden Ansprüche, wobei das elektronische Bauteil (21) derart konfiguriert ist, um den Wert des Gleichtaktstroms (i) zu regeln, von dem es am Eingang ein Signal empfängt, das für einen vorher festgelegten Sollwert, insbesondere Null, repräsentativ ist.

7. Verfahren nach einem der vorangehenden Ansprüche, wobei die elektrische Größe ein elektrisches Potential ist, das am Einspeisepunkt (26) anliegt und aus dem sich eine Spannung (Vs) ergibt, die zwischen dem Einspeisepunkt (26) und der Erde anliegt.

8. Verfahren nach Anspruch 7, wobei die Spannung (Vs) zwischen dem Einspeisepunkt (26), der über eine oder mehrere Impedanzen (28) mit der elektrischen Leitung (5) verbunden ist, und der Erde angelegt ist, indem angelegt wird:

- eine erste Spannung zwischen dem Einspeisepunkt (26) und der internen Masse (25) des elektronischen Bauteils (21), und
- eine zweite Spannung mit umgekehrtem Vorzeichen als das der ersten Spannung zwischen der Erde und der internen Masse (25) des elektronischen Bauteils (21),

derart, dass die Differenz zwischen der ersten und der zweiten Spannung gleich der Spannung (Vs) ist, die aus dem Anlegen des elektrischen Potentials durch das elektronische Bauteil (21) resultiert.

9. Verfahren nach einem der vorangehenden Ansprüche, wobei das elektronische Bauteil (21) ohne Transistor mit Feldeffekt ist.

10. Verfahren nach einem der vorangehenden Ansprüche, wobei die Spannung an den Klemmen der Quelle elektrischer Energie (2) eine Wechselspannung mit einer Frequenz von 50 Hz oder 60 Hz ist.

11. Verfahren nach einem der vorangehenden Ansprüche, wobei das elektronische Bauteil (21) konfiguriert ist, um nur bei Netzfrequenz einen aktiven Filter des Gleichtaktstroms zu bilden.

12. Verfahren nach einem der Ansprüche 1 bis 10, wobei das elektronische Bauteil (21) konfiguriert ist, um zu filtern:

- bei Netzfrequenz nur den Gleichtaktstrom, und
- nur die zehn ersten Harmonischen der Netzfrequenz dieses Gleichtaktstroms.

13. Verfahren nach einem der vorangehenden Ansprüche, wobei der Gleichtaktstrom auf der elektrischen Leitung (5) mit Hilfe eines Magnetkerns gemessen wird, um den gewickelt sind:

- jeder Leiter der elektrischen Leitung, und
- ein Messleiter.

14. Stromkreis (4), aufweisend:

- eine Gleichrichterstufe (8) einer Eingangswechselspannung, wobei die Stufe (8) eine positive Ausgangsklemme (9) und eine negative Ausgangsklemme (10) hat und der Kreis eine interne Masse (13) hat, gebildet von einer der Ausgangsklemmen (9, 10),

- eine elektrische Leitung (5), die imstande ist, mit einem Stromnetz derart verbunden zu sein, dass ein Austausch elektrischer Energie zwischen einer Quelle elektrischer Energie (2) des Netzes und dem Kreis (4) möglich ist, wobei die Leitung (5) mit der Gleichrichterstufe (8) verbunden ist, und

- ein elektronisches Bauteil (21), das zum einen mit der elektrischen Leitung (5) verbunden und imstande ist, zum anderen mit der Erde verbunden zu sein, wobei das Bauteil (21) konfiguriert ist, um zwischen einem Punkt (26), der durch mindestens eine Impedanz (28) mit der elektrischen Leitung (5) verbunden ist, eine elektrische Größe (Vs, Is) anzulegen, die erlaubt, wenn elektrische Energie zwischen dem Stromkreis (4) und der Quelle elektrischer Energie (2) ausgetauscht wird, den Gleichtaktstrom (i) auf die Frequenz des Stromnetzes zu reduzieren, wobei dieser Gleichtaktstrom (i) zwischen der internen Masse (13) des Kreises und der Erde fließt, **dadurch gekennzeichnet, dass** die elektrische Größe (Vs, Is) durch das elektronische Bauteil (21) angelegt wird:

mindestens in Abhängigkeit von einem Signal, das für den Gleichtaktstrom (i) repräsentativ ist, der auf der elektrischen Leitung (5) zwischen der Quelle elektrischer Energie (2) des Netzes und der oder den Impedanzen (28) gemessen wird, welche die elektrische Leitung (5) mit dem Einspeisepunkt (26) verbindet / verbinden, und einem Signal, das für den Strom (Is) repräsentativ ist, der zwischen dem Einspeisepunkt (26) und der Erde fließt,

oder mindestens in Abhängigkeit von einem Signal, das für den Gleichtaktstrom (i) repräsentativ ist, der auf der elektrischen Leitung (5) zwischen der Quelle elektrischer Energie (2) des Netzes und der oder den Impedanzen (28) gemessen wird, welche die elektrische Leitung (5) mit dem Einspeisepunkt (26) verbindet / verbinden, einem Signal, das für den Strom (Is) repräsentativ ist, der zwischen dem Einspeisepunkt (26) und der Erde fließt,, und einem Signal, das für den Strom repräsentativ ist, der in einem Kondensator (22) eines Filters elektromagnetischer Interferenzen (19) fließt, wobei der Filter elektromagnetischer Interferenzen (19) zwischen der oder den Impedanzen (28) und der Speichereinheit elektrischer Energie angeordnet ist.

## Claims

1. Method for reducing the common mode current (i) circulating between the internal ground (13) of an electric circuit (4) and the earth, when electrical energy is exchanged between an electrical energy storage unit of the electric circuit (4) and an electrical energy source (2) external to said circuit (4),

method in which an electrical magnitude (Vs, Is) is applied to an injection point (26) using an electronic component (21) connected through at least one impedance (28) to an electrical line (5) of said circuit (4) through which said electrical energy is exchanged, said applied electrical magnitude (Vs, Is) being usable to reduce the common mode current (i) at the frequency of the electrical network, this common mode current (i) circulating between the internal ground of the circuit (4) and the earth, **characterised in that**

said electrical magnitude (Vs, Is) is applied by the electronic component (21) as a function of:

- a signal representative of the common mode current (i) measured on the electrical line (5) between the electrical energy source (2) of the network and the impedance(s) (28) connecting the electrical line (5) to said injection point (26), and
- a signal representative of the current (Is) circulating between said injection point (26) and the earth,

or as a function of:

- a signal representative of the common mode current (i) measured on the electrical line (5) between the electrical energy source (2) of the network and the impedance(s) (28) connecting the electrical line (5) to said injection point (26),
- a signal representative of the current (Is) circulating between said injection point (26) and the earth, and
- a signal representative of the common mode current (i) measured on the electrical line (5) between said injection point (26) and the electrical energy storage unit,

or as a function of:

- a signal representative of the common mode current (i) measured on the electrical line (5) between the electrical energy source (2) of the network and the impedance(s) (28) connecting the electrical line (5) to said injection point (26),
- a signal representative of the current (Is) circulating between said injection point (26) and the earth, and
- a signal representative of the current circulating in a capacitor (22) of an electromagnetic interference filter (19), said electromagnetic interference filter (19) being positioned between the impedance(s) (28) and the electrical energy storage unit.

2. Method according to claim 1, **characterised in that** the electrical line (5) is single-phase and in which the electronic component (21) applies said electrical magnitude (Vs, Is) to an injection point (26) connected to:

- the phase (17) of the electrical line (5) through at least one impedance (28) interposed between said injection point (26) and said phase (17), and
- the neutral (18) of the electrical line (5) through at least one impedance (28) interposed between said injection point (26) and said neutral (18).

3. Method according to claim 1, **characterised in that** said electrical line (5) is three-phase and in which the electronic component (21) applies said electrical magnitude (Vs, Is) to an injection point (26) connected to each phase of the electrical line (5) through at least one corresponding impedance (28).

4. Method according to any one of the preceding claims, **characterised in that** said electrical magnitude (Vs, Is) is applied by the electronic component (21) as a function solely of a signal representative of the common mode current (i) measured on the electrical line (5) between the electrical energy source (2) of the network and the impedance(s) (28) connecting the electrical line (5) to said injection point (26).

5. Method according to one of the preceding claims, **characterised in that** the electronic component (21) comprises:

- a first sub-component (60) receiving as input the signal representative of the common current mode (i) measured on the electrical line (5) between the electrical energy source (2) of the network and the impedance(s) (28) connecting the electrical line (5) to said injection point (26), and
- a second sub-component (61) receiving as input the current (Is) circulating between said injection point (26) and the earth,

the outputs from each sub-component (60, 61) being added to generate the magnitude (Vs, Is) applied by the electronic component (21).

6. Method according to any one of the preceding claims, **characterised in that** the electronic component (21) is configured so as to enslave the value of the common mode current (i) from which it receives as input a signal representative of a predefined set value, particularly equal to zero.

7. Method according to any one of the preceding claims, **characterised in that** said electrical magnitude is an electrical potential applied to the injection point (26) and that results in a voltage (Vs) applied between said injection point (26) and the earth.

8. Method according to claim 7, said voltage (Vs) being applied between the injection point (26) connected to the electrical line (5) through one or several impedances (28) and the earth, by applying:

- a first voltage between said injection point (26) and the internal ground (25) of the electronic component (21), and
- a second voltage with opposite sign to the first voltage, between the earth and the internal ground (25) of the electronic component (21),

such that the difference between the first and second voltages is equal to said voltage (Vs) resulting from the application of said electrical potential by the electronic component (21).

9. Method according to any one of the preceding claims, **characterised in that** the electronic component (21) does not have a field effect transistor.

10. Method according to any one of the preceding claims, **characterised in that** the voltage at the terminals of the electrical energy source (2) is an alternative voltage for which the frequency is 50 Hz or 60 Hz.

11. Method according to any one of the preceding claims, the electronic component (21) being configured to form an active filter of the common mode current at power frequency only.

12. Method according to any one of claims 1 to 10, the electronic component (21) being configured to filter:

- only common mode current at the power frequency, and
- only the first ten harmonics of the power frequency of this common mode current.

13. Method according to any one of the preceding claims, **characterised in that** the common mode current is measured on the electrical line (5) using a magnetic core around which the following are wound:

- each conductor of the electrical line, and
- a measurement conductor.

14. Electrical circuit (4) comprising:

- a stage (8) for rectification (8) of an alternating input voltage, said stage (8) having a positive output terminal (9) and a negative output terminal (10) and the circuit having an internal ground (13) formed by one of said output terminals (9, 10),
- an electrical line (5) that can be connected to an electrical network so as to enable an exchange of electrical energy between an electrical energy source (2) of said network and said circuit (4), the line (5) being connected to said rectification stage (8), and
- an electronic component (21) connected firstly to the electrical line (5), and that can also be connected to the earth, the component (21) being configured to apply an electrical magnitude (Vs, Is) between a point (26) connected through at least one impedance (28) to the electrical line (5), and when electrical energy us exchanged between the electrical circuit (4) and the electrical energy source (2), this electrical magnitude making it possible to reduce the common mode current (i) at the frequency of the electrical network, this common mode current (i) circulating between the internal ground (13) of the circuit and the earth, **characterised in that** said electrical magnitude (Vs, Is) is applied by the electronic component (21):

at least as a function of a signal representative of the common mode current (i) measured on the electrical line (5) between the electrical energy source (2) of the network and the impedance(s) (28) connecting the electrical line (5) to said injection point (26), and a signal representative of the current (Is) circulating between said injection point (26) and the earth,

or at least as a function of a signal representative of the common mode current (i) measured on the electrical line (5) between the electrical energy source (2) of the network and the impedance(s) (28) connecting the electrical line (5) to said injection point (26), a signal representative of the current (Is) circulating between said injection point (26) and the earth, and a signal representative of the current circulating in a capacitor (22) of an electromagnetic interference filter (19), said electromagnetic interference filter (19) being arranged between the impedance(s) (28) and the electrical energy storage unit.

**Fig. 1**

**Fig. 2**

**Fig. 3**

**Fig. 4**

**Fig. 5**

EP 2 768 127 B1

Fig. 6

Fig.8

Fig. 7

Fig. 9

Fig. 10

Fig. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040004514 A
- WO 201226186 A1
- US 20100295508 A
- WO 2010057892 A